# FASCICULE DE BREVET EUROPEEN

(11) **EP 2 662 273 B1**
(45) Date de publication et mention de la délivrance du brevet: **18.03.2015**
(21) Numéro de dépôt: 13166302.3
(22) Date de dépôt: 02.05.2013
(51) Int. Cl.: B62K 21/18, B62K 21/14, B62K 21/12, B62K 21/16

(54) **Potence de cycle à chape de serrage**
Fahrradsattelrohr mit Einspann-Gabelgelenk
Cycle arm with clamping yoke

(30) Priorité: 11.05.2012 FR 1254317
(43) Date de publication de la demande: 13.11.2013
(73) Titulaire: Look Cycle International, 58000 Nevers (FR)
(72) Inventeur: Lanz, Matthieu, 58000 Nevers (FR)
(74) Mandataire: Petit, Maxime

(56) Documents cités:
- EP-A1- 2 248 717
- FR-A- 1 537 056
- NL-C2- 1 001 155

## Description

La présente invention concerne une potence de cycle à chape de serrage. La potence est à l'une de ses extrémités fixée à la partie supérieure d'un tube pivot monté rotatif dans une douille de direction d'un cadre de cycle, et porte à son extrémité opposée le guidon du cycle qui est serré à l'aide d'une chape de serrage.

Une telle potence de cycle est par exemple connue du EP2248717 de la demanderesse. L'extrémité de la potence qui porte le guidon se termine par un évidement de réception adapté à la forme du guidon. Cet évidement de réception peut être fermé vers l'extérieur par la chape de serrage également adaptée à la forme du guidon et reliée au corps de potence pour serrer le guidon à l'aide de moyens de serrage entre l'extrémité de la potence et la chape qui ensemble définissent sensiblement un élément tubulaire qui peut être circulaire ou non en fonction de la section du guidon (voir en particulier figure 9 de ce document).

Le document EP2248717 décrit deux variantes d'une telle chape de serrage demi-cylindrique, à savoir une première variante dans laquelle la chape est fixée à l'extrémité de la potence à l'aide de moyens de serrage comportant des vis des serrage, et une deuxième variante dans laquelle la chape est d'un côté montée articulée sur l'extrémité de la potence, et de l'autre côté reliée à la potence à l'aide de vis de serrage. La première variante est également décrite dans le US2009079160 et la deuxième dans le EP1695900.

On connaît également d'autres potences décrites dans les documents NL 1 001 155, FR 1537056 et EP 0 591 897. Ces potences ne sont pas pourvue d'une chape comme celle décrite dans le document EP2248717. L'extrémité avant libre du corps de potence est ici recourbée en arrière de manière à définir une fente sur la face inférieure du corps de potence. Un jeu de réglage de l'espace autour du guidon est ainsi obtenu et le serrage du guidon peut être réglé à l'aide d'une vis de serrage permettant de réduire la largeur de la fente en rapprochant l'extrémité libre à la face inférieure du corps de potence.

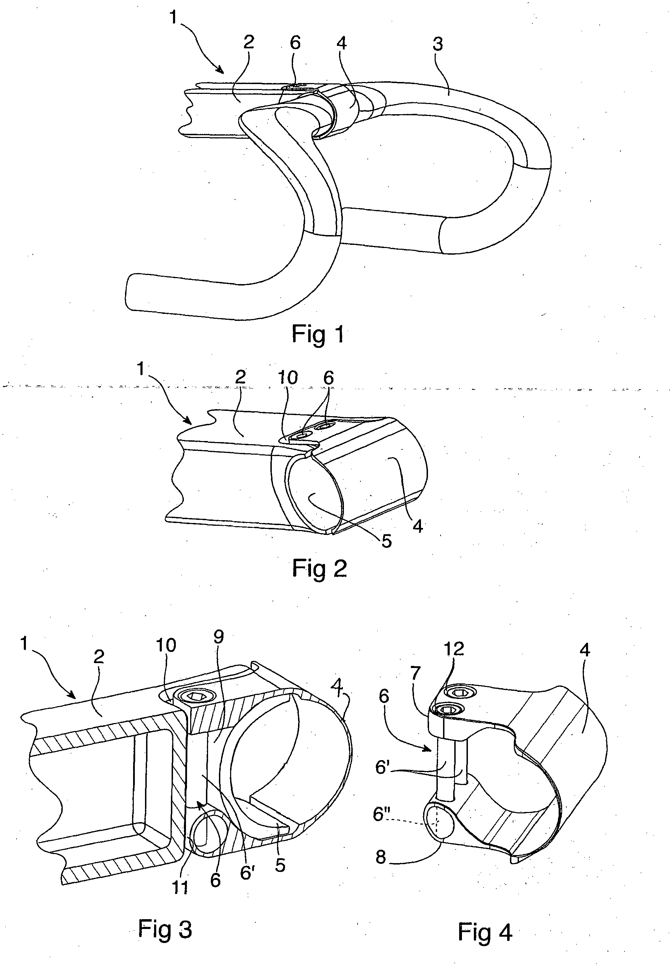

On constate que le corps de potence selon l'un ou l'autre ce ces trois documents présente ainsi des moyens de serrage du guidon peu déformables qui ne peuvent en aucun cas s'ouvrir vers l'extérieur pour permettre la mise en place, de devant, d'un guidon qui présente une forme aérodynamique à largeur variable selon son axe (du genre illustré à figure 1 de la demande).

Un but de l'invention est de proposer une potence à chape de serrage susceptible d'apporter une aérodynamique améliorée à l'ensemble chape-guidon en s'intégrant parfaitement avec le reste du cycle. La chape de serrage selon l'invention peut s'adapter à n'importe quelle dimension du guidon qui en général présente une forme cylindrique. En outre, la chape de serrage selon l'invention est plus légère que celles actuellement connues.

Un autre but de l'invention est de proposer une chape qui permet d'assembler préalablement le guidon à la chape ou bien d'ouvrir celle-ci suffisamment pour pouvoir mettre le guidon en place en l'introduisant de devant, et non pas de côté qui est la seule possibilité offerte par les potences décrites ces trois derniers documents.

L'objet de l'invention est une potence de cycle à chape de serrage comprenant un corps de potence dont une extrémité est adaptée pour être fixée à un tube pivot d'un cycle et dont l'extrémité opposée se termine par un évidement de réception adapté à la forme d'un guidon et une chape de serrage, ledit évidemment de réception pouvant être fermé vers l'extérieur par ladite chape de serrage adaptée à la forme du guidon et reliée au corps de potence pour serrer le guidon dans l'évidement de réception à l'aide de moyens de serrage, caractérisée en **ce que** ladite chape de serrage est formée par une pièce rapportée sous forme d'une bande souple dont une première extrémité est ancrée dans le corps de potence et dont une deuxième extrémité est reliée auxdits moyens de serrage disposés dans une cavité du corps de potence derrière ledit évidement de réception en étant aptes à rapprocher ladite deuxième extrémité à ladite première extrémité de la bande formant chape de serrage de manière à régler la force de serrage est formée par une bande souple du guidon.

Selon d'autres caractéristiques de l'invention :
- ladite deuxième extrémité de la bande formant chape de serrage est reliée directement à ladite première extrémité de la bande formant chape de serrage par lesdits moyens de serrage qui effectuent en même temps l'ancrage de ladite première extrémité dans le corps de potence ;
- lesdits moyens de serrage comportent au moins une vis de serrage coopérant avec un trou taraudé prévu à ladite deuxième extrémité ;
- ladite première extrémité de la bande formant chape de serrage s'étend dans le corps de potence en passant par un premier orifice de ladite cavité et est reliée à un organe de retenue s'étendant transversalement dans ladite cavité, ladite deuxième extrémité de la bande formant chape de serrage étant disposée dans un deuxième orifice de ladite cavité opposé audit premier orifice et présente au moins un trou traversant recevant un moyen de serrage comprenant une vis de serrage, ladite vis de serrage étant apte à coopérer avec un trou taraudé effectué dans une pièce transversale disposée dans ladite cavité ;
- une plaque rigide de forme adaptée à celle du guidon est placée sur la face intérieure de la bande formant chape de serrage ;
- ladite plaque présente au milieu de sa face tournée vers l'extérieur une rainure centrale s'étendant d'un bord à l'autre et apte à recevoir la bande formant chape de serrage ;
- les deuxième et première extrémités de la bande formant chape de serrage présente une surépaisseur ;
- la bande formant chape de serrage est une bande métallique ;
- la bande formant chape de serrage est en un matériau composite ; et
- le matériau composite comporte des fibres et une résine polymérisée.

D'autres caractéristiques et avantages de l'invention ressortiront de la description qui va suivre de deux modes de réalisation non limitatifs de l'invention, en référence aux figures annexées dans lesquelles :
- la figure 1 est une vue en perspective montrant l'extrémité avant d'une potence pourvue d'une chape de serrage selon l'invention en train de serrer un guidon ;
- la figure 2 est une vue en perspective correspondant à la figure 1, sans guidon ;
- la figure 3 est une vue en coupe longitudinale et en perspective montrant une vis de serrage à l'intérieur du corps de potence ;
- la figure 4 montre une vue en perspective d'un premier mode de réalisation de la chape de serrage selon l'invention ;
- la figure 5 est une vue en perspective montrant une chape de serrage selon l'invention au moment de son assemblage au corps de potence ;
- la figure 6 est une vue en perspective montrant une plaque destinée à être placée sur la face intérieure de la chape de serrage selon l'invention ;
- la figure 7 est une vue en perspective montrant une moitié d'une potence en deux pièces pourvue d'une chape de serrage selon l'invention ;
- la figure 8 est une vue en perspective montrant la potence en deux pièces après assemblage ;
- la figure 9 est une vue de devant illustrant l'aspect d'une chape de serrage selon l'invention en train de serrer un guidon ;
- la figure 10 est une vue en perspective et en coupe montrant une potence en une seule pièce pourvue d'une chape de serrage selon l'invention ; et
- la figure 11 est une vue en perspective montrant l'ensemble de la potence en une seule pièce de la figure 10.

Dans les figures, les éléments identiques ou équivalents porteront les mêmes signes de référence.

La potence 1 comporte un corps de potence 2 qui est un corps creux, de préférence en carbone compressé.

L'extrémité arrière du corps de potence 2 est pourvue de moyens de fixation de la potence 1 à l'extrémité haute d'un tube pivot de fourche (non représenté). Ces moyens de fixation ne sont pas montrés sur les figures puisqu'ils ne se rapportent pas directement à l'invention. Pour plus de détails, voir l'exemple décrit dans le EP 2248717 de la demanderesse.

L'invention se situe à l'extrémité opposée de la potence 1, c'est-à-dire l'extrémité à laquelle un guidon 3 est maintenu serré à l'aide d'une chape de serrage 4 (voir figure 1) reliée à cette extrémité.

Cette extrémité opposée se termine par un évidement de réception 5 adapté à la forme d'un guidon. Cet évidement de réception 5 peut être fermé vers l'extérieur par la chape de serrage 4 qui est également adaptée à la forme du guidon. Ces deux éléments prennent en quelque sorte le guidon en étau. La chape de serrage 4 est à l'aide de moyens de serrage 6 reliée au corps de potence 2 pour serrer le guidon 3 en le sollicitant dans l'évidement de réception 5.

Selon une caractéristique importante de l'invention, la chape de serrage 4 est formée par une pièce rapportée sous forme d'une bande souple dont une première extrémité 7 est ancrée dans le corps de potence 2 et dont une deuxième extrémité 8 est reliée aux moyens de serrage 6. Il s'agit donc d'un élément séparé par rapport au corps de potence et cet élément peut ainsi être en un matériau différent de celui de corps de potence comme cela est expliqué plus en détail ci-dessous.

Les moyens de serrage 6 comporte au moins une et dans l'exemple illustré deux vis 6' disposées à l'intérieur du corps de potence 2. Les vis 6' s'étendent sur sensiblement toute la hauteur de la potence 1 en étant disposées dans une cavité 9 formée centralement derrière une paroi d'extrémité délimitant l'évidement de réception 5. La cavité 9 est ouverte vers le haut par un premier orifice 10 et vers le bas par un deuxième orifice 11 opposés au premier orifice. Ces premier et deuxième orifices permettent de recevoir les extrémités 7, 8 de la bande 4.

La bande souple formant la chape 4 est relativement mince, de l'ordre de 1 mm, et présente aux première et deuxième extrémités 7, 8 une surépaisseur importante, d'une part pour former des logements 12 pour les têtes de vis, et d'autre part pour y aménager des trous taraudés 6" coopérant avec une vis respective.

Les vis sont ainsi aptes à rapprocher la deuxième extrémité 8 à la première extrémité 7 de la bande 4 de manière à régler la force de serrage du guidon de manière à obtenir un serrage sûr et très fiable.

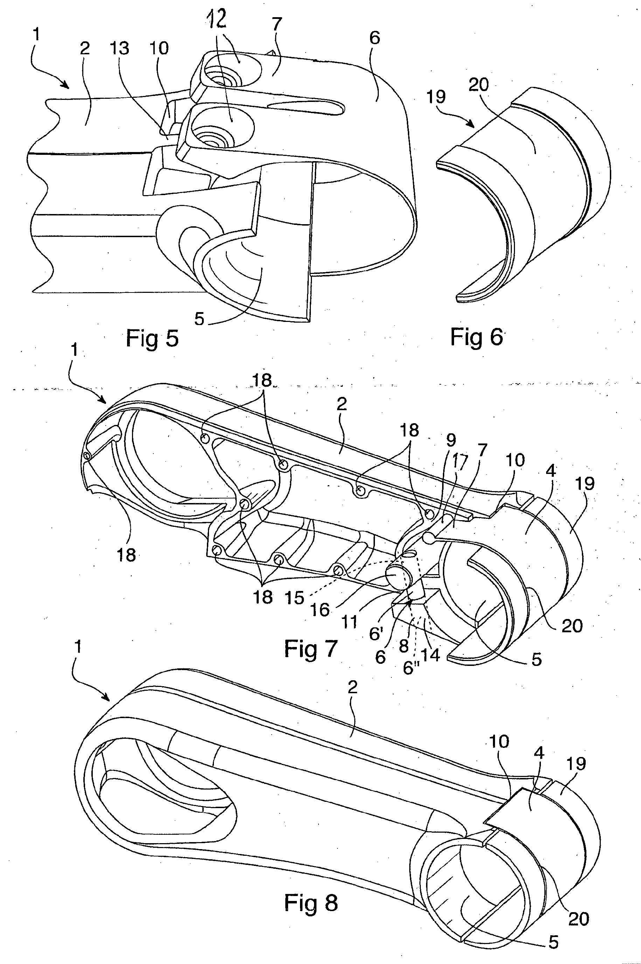

La figure 5 est une vue correspondant à la vue 3 au moment de l'assemblage des moyens de serrage. Ici, la première extrémité de la bande 4 est pourvue d'une fente longitudinale centrale 12 et le premier orifice 10 est pourvu d'une paroi centrale 13 qui pénètre dans la fente 12 lorsque les éléments sont assemblés.

Selon ce mode de réalisation, il est également possible de mettre d'abord la bande formant chape 4 à la manière d'un clips sur la partie centrale du guidon pour ensuite fixer cet ensemble chape-guidon sur l'extrémité avant de la potence.

La figure 7 montre une moitié d'une potence en deux parties et la figure 8 montre cette potence après assemblage des deux parties.

Selon ce deuxième mode de réalisation, la première extrémité 7 de la bande 4 est toujours ancrée dans le corps de potence 2, alors que la deuxième extrémité 8 comporte des trous traversant recevant des moyens de serrage sous forme de vis 6' qui viennent se visser dans des trous taraudés prévus dans une pièce transversale 16 disposée dans la cavité 9 du corps de pédale 2.

La pièce transversale 16 présente de préférence une forme cylindrique et est montée dans la cavité 9 avec possibilité de rotation pour être mise dans une position optimale pour la mise ne place des vis 6'.

La première extrémité 7 de la bande formant chape de serrage 4 se termine par une surépaisseur qui dans l'exemple illustré présente la forme d'un petit cylindre 17 dimensionné de telle façon qu'il ne peut pas sortir par le premier orifice et fonctionne ainsi comme un organe de retenue de la première extrémité 7 de la bande dans la cavité 9.

Pour fixer le guidon 3 dans la chape 4, on met d'abord le petit cylindre 17 en place et ensuite on ouvre la bande souple formant chape 4 pour y introduire, de devant, la partie centrale du guidon. Ensuite, on serre le guidon à l'aide des vis 6'.

Dans l'exemple illustré à la figure 7, la moitié de potence est sur sa face de jonction pourvue d'une pluralité de trous 18 aptes à recevoir des tenons correspondants (non représentés) prévus sur la face de jonction de l'autre moitié. Les deux pièces peuvent ensuite être reliées par collage ou soudage en fonction du matériau de la potence.

Dans le mode de réalisation montré aux figures 7 et 8, une plaque rigide 19 de forme adaptée à celle du guidon 3 est disposée sur la face intérieure de la chape de serrage 4.

Cette plaque rigide 19 présente avantageusement sur sa face tournée vers l'extérieur une rainure centrale 20 s'étendant d'un bord à l'autre qui est apte à recevoir la bande formant chape de serrage 4. De préférence, la profondeur de la rainure centrale 20 correspond sensiblement à l'épaisseur de la bande de sorte que celle-ci soit disposée au raz de la face extérieure de la plaque 19.

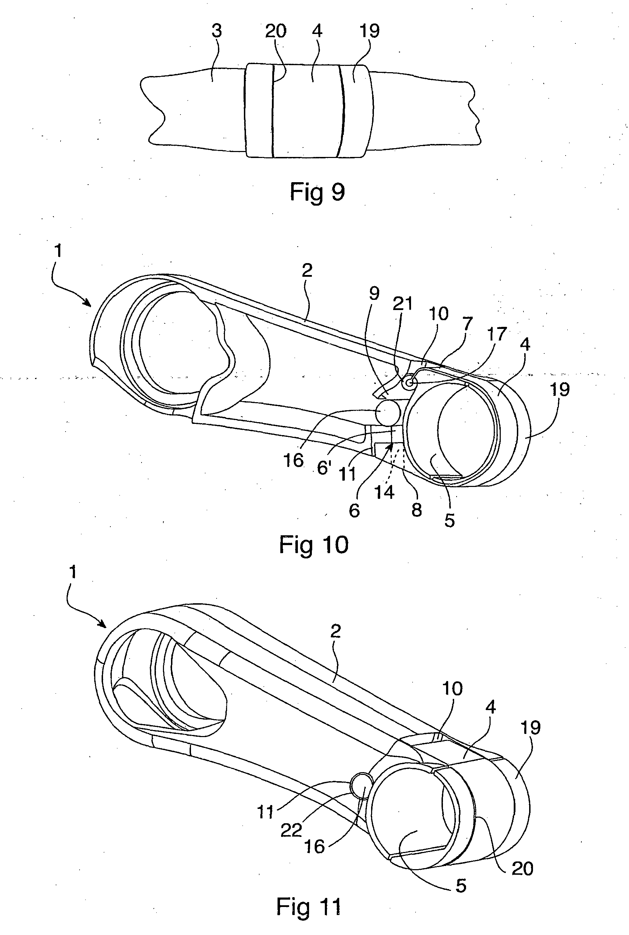

Ainsi, et grâce à la présence de cette plaque 19, l'extension de la bande formant chape de serrage 4 autour du guidon 3 se fait sans angles et des formes parfaitement continues sont obtenues, comme il ressort de ces figures, ainsi que de la figure 9 qui est une vue de devant d'un guidon 3 monté à la potence selon l'invention.

Finalement, les figures 10 et 11 montrent une variante du deuxième mode de réalisation dans laquelle la potence en une seule pièce qui par ailleurs est très similaire à la potence en deux pièces montrée aux figures 7 et 8.

Pour l'assemblage des moyens de serrage sur cette potence monobloc, on introduit la première extrémité 7 de la bande formant chape de serrage 4 par le premier orifice 10 et on le fait ressortir par le deuxième orifice 11, on accroche ensuite un élément tubulaire fendu 21 sur le petit cylindre 17 à l'extrémité de la première extrémité 7 de la bande 6. Le premier orifice 10 de la cavité 9 du corps de potence est dimensionné de sorte que la première extrémité 7 munie de l'élément tubulaire fendu 21 soit ainsi retenue dans la cavité. Tous les autres éléments sont les mêmes que ceux déjà décrits en référence aux figures 7 et 8.

La bande formant chape de serrage 4 peut être métallique, de préférence en acier, mais elle peut également être produite en aluminium ou tout autre métal convenable.

Des matériaux composites peuvent également être utilisés dans la bande formant chape de serrage 4, tels que des fibres en combinaison avec une résine polymérisée.

La bande formant chape de serrage 4 peut également être en fibres sans résine du type fibres de carbone, de verre, d'aramide, de lin etc.

Est ainsi obtenue, grâce à l'invention, une potence de cycle dont l'extrémité avant présente des formes aérodynamiques, simples et esthétiques.

Bien entendu, l'invention n'est pas limitée aux exemples illustrés et décrits, et l'homme du métier sera en mesure de prévoir de différentes variantes de ces modes de réalisation sans pour autant sortir du cadre de l'invention.

## Revendications

1. Potence de cycle comprenant un corps de potence (2) dont une extrémité est adaptée pour être fixée à un tube pivot d'un cycle et dont l'extrémité opposée se termine par un évidement de réception (5) adapté à la forme d'un guidon (3) et une chape se serrage (4), ledit évidemment de réception (5) pouvant être fermé vers l'extérieur par ladite chape de serrage (4) adaptée à la forme du guidon (3) et reliée au corps de potence (2) pour serrer le guidon (3) dans l'évidement de réception (5) à l'aide de moyens de serrage (6), **caractérisée en ce que** ladite chape de serrage (4) est formée par une pièce rapportée sous forme d'une bande souple dont une première extrémité (7) est ancrée dans le corps de potence (2) et dont une deuxième extrémité (8) est reliée auxdits moyens de serrage (6) disposés dans une cavité (9) du corps de potence (2) derrière ledit évidement de réception (5) en étant aptes à rapprocher ladite deuxième extrémité (8) à ladite première extrémité (7) de la bande formant chape de serrage (4) de manière à régler la force de serrage du guidon (3).

2. Potence de cycle selon la revendication 1, **caractérisée en ce que** ladite deuxième extrémité (8) de la bande formant chape de serrage (4) est reliée directement à ladite première extrémité (7) de la bande formant chape de serrage (4) par lesdits moyens de serrage (6) qui effectuent en même temps l'ancrage de ladite première extrémité (7) dans le corps de potence (2).

3. Potence de cycle selon la revendication 2, **caractérisée en ce que** lesdits moyens de serrage (6) comportent au moins une vis de serrage (6') coopérant avec un trou taraudé (6") prévu à ladite deuxième extrémité (8).

4. Potence de cycle selon la revendication 1, **caractérisée en ce que** ladite première extrémité (7) de la bande formant chape de serrage (4) s'étend dans le corps de potence (2) en passant par un premier orifice (10) de ladite cavité (9) et est reliée à un organe de retenue (17) s'étendant transversalement dans ladite cavité, ladite deuxième extrémité (8) de la bande formant chape de serrage (4) étant disposée dans un deuxième orifice (11) de ladite cavité (9) opposé audit premier orifice (10) et présente au moins un trou traversant (14) recevant un moyen de serrage (6) comprenant une vis de serrage (6'), ladite vis de serrage étant apte à coopérer avec un trou taraudé (15) effectué dans une pièce transversale (16) disposée dans ladite cavité (9).

5. Potence de cycle selon l'une quelconque des revendications précédentes, **caractérisée en ce qu'**une plaque rigide (19) de forme adaptée à celle du guidon (3) est placée sur la face intérieure de la bande formant chape de serrage (4).

6. Potence de cycle selon la revendication 5, **caractérisée en ce que** ladite plaque (19) présente au milieu de sa face tournée vers l'extérieur une rainure centrale (20) s'étendant d'un bord à l'autre et apte à recevoir la bande formant chape de serrage (4).

7. Potence de cycle selon l'une quelconque des revendications précédentes, **caractérisée en ce que** les deuxième et première extrémités (7, 8) de la bande formant chape de serrage (4) présente une surépaisseur.

8. Potence de cycle selon l'une quelconque des revendications précédentes, **caractérisée en ce que** la bande formant chape de serrage (4) est une bande métallique.

9. Potence de cycle selon l'une quelconque des revendications précédentes, **caractérisée en ce que** la bande formant chape de serrage (4) est en un matériau composite.

10. Potence de cycle selon la revendication 9, **caractérisée en ce que** le matériau composite comporte des fibres et une résine polymérisée.

## Patentansprüche

1. Fahrradrohr, das einen Rohrkörper (2), von dem ein Ende ausgebildet ist, um an einem Schwenkrohr eines Fahrrads befestigt zu sein und dessen gegenüberliegendes Ende in einer Empfangsaussparung (5) endet, die an die Form eines Lenkers (3) angepasst ist, und einen Spannbügel (4) umfasst, wobei die Empfangsaussparung (5) nach außen durch den Spannbügel (4) verschließbar ist, der an die Form des Lenkers (3) angepasst und mit dem Rohrkörper (2) verbunden ist, um den Lenker (3) in der Empfangsaussparung (5) mit Hilfe von Spannmitteln (6) zu spannen, **dadurch gekennzeichnet, dass** der Spannbügel (4) von einem angesetzten Teil in Form eines elastischen Bands gebildet ist, von dem ein erstes Ende (7) im Rohrkörper (2) verankert ist und ein zweites Ende (8) mit den Spannmitteln (6) verbunden ist, die in einem Hohlraum (9) des Rohrkörpers (2) hinter der Empfangsaussparung (5) angeordnet sind und imstande, das zweite Ende (8) an das erste Ende (7) des Spannbügel (4) bildenden Bands derart anzunähern, dass die Spannkraft des Lenkers (3) einstellbar ist.

2. Fahrradrohr nach Anspruch 1, **dadurch gekennzeichnet, dass** das zweite Ende (8) des Spannbügel (4) bildenden Bands direkt mit dem ersten Ende (7) des Spannbügel (4) bildenden Bands durch die Spannmittel (6) verbunden ist, die gleichzeitig die Verankerung des ersten Endes (7) im Rohrkörper (2) durchführen.

3. Fahrradrohr nach Anspruch 2, **dadurch gekennzeichnet, dass** die Spannmittel (6) mindestens eine Spannschraube (6') aufweisen, die mit einem Gewindeloch (6") zusammenarbeitet, die in dem zweite Ende (8) vorgesehen ist.

4. Fahrradrohr nach Anspruch 1, **dadurch gekennzeichnet, dass** sich das erste Ende (7) des Spannbügel (4) bildenden Bands im Rohrkörper (2) erstreckt und dabei durch eine erste Öffnung (10) des Hohlraums (9) läuft und mit einem sich quer im Hohlraum erstreckenden Halteorgan (17) verbunden ist, wobei das zweite Ende (8) des Spannbügel (4) bildenden Bands in einer zweiten Öffnung (11) des Hohlraums (9), die der ersten Öffnung (10) gegenüberliegt, angeordnet ist und mindestens ein Durchgangsloch (14) aufweist, das mindestens ein Spannmittel (6) aufweist, das eine Spannschraube (6') umfasst, wobei die Spannschraube imstande ist, mit einem Gewindeloch (15) zusammenzuarbeiten, das in ein erstes, in dem Hohlraum (9) angeordneten Querteil (16) eingearbeitet ist.

5. Fahrradrohr nach einem der vorangehenden Ansprüche, **dadurch gekennzeichnet, dass** eine starre Platte (19) mit einer Form, die an die Form des Lenkers (3) angepasst ist, auf der Innenfläche des Spannbügel (4) bildenden Bands platziert ist.

6. Fahrradrohr nach Anspruch 5, **dadurch gekennzeichnet, dass** die Platte (19) in der Mitte ihrer nach außen zeigenden Fläche eine zentrale Rille (20) aufweist, die sich von einem Rand zum anderen erstreckt und imstande ist, das Spannbügel (4) bildende Band zu empfangen.

7. Fahrradrohr nach einem der vorangehenden Ansprüche, **dadurch gekennzeichnet, dass** das zweite und erste Ende (7, 8) des Spannbügel (4) bildenden Bands eine Überdicke aufweisen.

8. Fahrradrohr nach einem der vorangehenden Ansprüche, **dadurch gekennzeichnet, dass** das Spannbügel (4) bildende Band ein Metallband ist.

9. Fahrradrohr nach einem der vorangehenden Ansprüche, **dadurch gekennzeichnet, dass** das Spannbügel (4) bildende Band aus einem Verbundmaterial ist.

10. Fahrradrohr nach Anspruch 9, **dadurch gekennzeichnet, dass** das Verbundmaterial Fasern und ein polymerisiertes Harz aufweist.

## Claims

1. A cycle arm with a clamping yoke comprising an arm body (2) whereof one end can be fastened to a pivot tube of a cycle and the opposite end ends with a receiving recess (5) adapted to the shape of a handlebar (3) and a clamping yoke (4), said receiving recess (5) being able to be outwardly closed by said clamping yoke (4) adapted to the shape of the handlebar (3) and connected to the arm body (2) to grip the handlebar (3) in the receiving recess (5) using clamping means (6), **characterized in that** said clamping yoke (4) is formed by an attached part in the form of a flexible strip whereof a first end (7) is anchored in the arm body (2) and whereof a second end (8) is connected to said clamping means (6) positioned in a cavity (9) of the arm body (2) behind said receiving recess (5) while being able to bring said second end (8) closer to said first end (7) of the strip forming the clamping yoke (4) so as to adjust the clamping force of the handlebar (3).

2. The cycle arm according to claim 1, **characterized in that** said second end (8) of the strip forming the clamping yoke (4) is directly connected to said first end (7) of the strip forming the clamping yoke (4) by said clamping means (6), which at the same time anchor the first end (7) in the arm body (2).

3. The cycle arm according to claim 2, **characterized in that** said clamping means (6) comprises at least one clamping screw (6') cooperating with a tapped hole (6") provided at said second end (8).

4. The clamping arm according to claim 1, **characterized in that** said first end (7) of the strip forming the clamping yoke (4) extends in the arm body (2) while passing through a first orifice (10) of said cavity (9) and is connected to a retaining member (17) extending transversely in said cavity, said second end (8) of the strip forming a clamping yoke (4) being positioned in a second orifice (11) of said cavity (9) opposite said first orifice (10) and has at least one through hole (14) receiving clamping means (6) comprising a clamping screw (6'), said clamping screw being suitable for cooperating with a tapped hole (15) made in a through piece (16) positioned in said cavity (9).

5. The cycle arm according to any one of the preceding claims, **characterized in that** a rigid plate (19) with a shape adapted to that of the handlebar (3) is placed on the inner face of the strip forming the clamping yoke (4).

6. The cycle arm according to claim 5, **characterized in that** said plate (19) has, in the middle of its face turned outward, a central slot (20) extending from one edge to the other and able to receive the strip forming the clamping yoke (4).

7. The cycle arm according to any one of the preceding claims, **characterized in that** the second and first ends (7, 8) of the strip forming the clamping yoke (4) have an overthickness.

8. The cycle arm according to any one of the preceding claims, **characterized in that** the strip forming the clamping yoke (4) is a metal strip.

9. The cycle arm according to any one of the preceding claims, **characterized in that** the strip forming the clamping yoke (4) is made from a composite material.

10. The cycle arm according to claim 9, **characterized in that** the composite material comprises fibers and a polymerized resin.
